# EUROPEAN PATENT SPECIFICATION

(11) **EP 0 297 249 B1**
(45) Date of publication and mention of the grant of the patent: **04.08.1993**
(21) Application number: 88107106.2
(22) Date of filing: 03.05.1988
(51) Int. Cl.: G01V 5/00, G01T 3/00

(54) **Composite cavity structure for an explosive detection system**
Mehrkomponenten-Hohlraumstruktur für ein Explosivstoff-Detektorensystem
Détecteur de matière explosive avec une structure de cavité composite

(30) Priority: 26.05.1987 US 54329
(43) Date of publication of application: 04.01.1989
(73) Proprietor: SCIENCE APPLICATIONS INTERNATIONAL CORPORATION, San Diego California 92121 (US)
(72) Inventor: Gozani, Tsahi, Palo Alto California 94303 (US)
(74) Representative: Grünecker, Kinkeldey, Stockmair & Schwanhäusser Anwaltssozietät

(56) References cited:
- US-A- 3 832 545
- PRODUCT ENGINEERING, vol. 42, no. 12, July 1971, pages 38-40, New York, US; "Neutron radiography takes x-ray pictures - with a difference"
- IEEE TRANSACTIONS ON NUCLEAR SCIENCE, vol. NS-28, no. 2, April 1981, pages 1637-1639, IEEE, New York, US; G.W. SMITH et al.: "Application of a 14 MeV neutron source to the detection of special nuclear material diversion"

## Description

The present invention relates to an apparatus and a cavity structure for use in a nitrogen, especially in an explosive detection system, as set forth in the preamble of claim 1 and 16, respectively. Apparatus and structure of this kind are known from US-A-3 832 545.

A great need exists for the scanning of luggage, baggage and other parcels for the detection of any explosive material contained or concealed within their confines. For example, a large number such as close to two million (2,000,000) pieces of luggage are checked and/or carried onto aircraft daily by close to seven hundred and fifty thousand (750,000) passengers within six hundred (600) airports extending across the USA. There is a possibility, albeit remote, that any one piece of luggage or parcel may contain explosive material.

It is, therefore, desirable to protect the public by providing detection systems to scan luggage and parcels to detect the presence of any explosive material. It is appreciated that any such system must have a high probability of detection in order to be effective.

It is also appreciated that any detection system, because of the large number of passengers, is bound to occasionally give a false alarm. The probability of these false alarms must be minimized in order to provide for an effective explosive detection system. This is true, because when an alarm occurs it is not known at that time whether is it proper or false. This means that each time an alarm occurs a passenger may be detained for further investigation. If false alarms are significantly high, the nuisance level and the delays could be unacceptable to passengers. It is, therefore, important that any explosive detection system must have a very high probability of detection and yet at the same time have a very low probability of false alarms. These conflicting criteria have hampered efforts in the past to build a reliable and usable system.

The prior art systems have not had the desired characteristics of having a high probability of detection with a low probability of false alarms. As an example, one such prior art system is shown in US-A-3,832,545, mentioned above. This document shows a system for the detection of nitrogen which is generally present in the explosive materials to be detected. The object under observation is positioned within a cavity structure and is bombarded there by thermal neutrons. The thermal neutrons react with any nitrogen contained in the object to provide for the emission of gamma rays at an energy level characteristic of the presence of nitrogen. The emitted gamma rays are then detected by an array of gamma ray detectors.

The present invention provides for an improved composite cavity structure which enhances the number and spectrum of the thermal neutrons within the cavity structure. The composite cavity structure of the present invention thereby provides for an enhancement of the production of gamma rays which in turn provides for an enhancement in the detecting of these gamma rays and thereby enhances the detection of nitrogen.

Aforementioned US-A-3,832,545 specifically describes the use of liquid and plastic type organic scintillator detectors. These detectors are provided in an array to produce a two dimensional profile of the nitrogen content within the object being inspected. The applicants also have suggested to make use of inorganic scintillators as detectors. These inorganic detectors are formed as a C-ring so as to provide for a detection of a slice or plane of the object under inspection. The object is moved continuously through the C-ring of detectors so as to provide for a plurality of slices or parallel successive planes. The parallel successive planes may then be used to build up a three dimensional profile of the concentration of the nitrogen contained within the object under inspection. The composite cavity structure of the present invention may be used with either the prior art organic scintillators in an array or said C-ring array of inorganic scintillators. However, the present invention is described with reference to the use of such C-ring array of inorganic scintillators.

The detection of the explosive should be independent of the specific configuration and must be non-intrusive in order to protect privacy. The detection equipment, of course, must be non-hazardous to the contents of the checked items and to the operating personnel and environment. Other more general criteria are that the system must be reliable, easily maintained and operable by relatively unskilled personnel and that the cost must be low enough so as to be non-burdensome to airlines and airports. Finally, the size of the system must be relatively small so that the system may be useful in a wide variety of environments.

In order to develop a proper explosive detection system, an understanding of the properties of the various explosives are relevant to the specific techniques to be used. Although there are a large number of explosive types, a general classification into six major groups with minor variations, has been proposed. The proposed classification scheme includes the following types of explosives: (1) nitroglycerine based dynamites, (2) ammonium nitrate based dynamites, (3) military explosives, (4) homemade explosives, (5) low order powders, and (6) special purpose explosives.

In general, all of these explosives contain a relatively high amount of nitrogen concentration ranging from nine to thirty five percent by weight and with a normal concentration range between fifteen to thirty five percent with twenty percent as a typical value. The nominal density of these explosives is typically 1.6 g/cm³ and with a range from 1.25 to 2 g/cm³ or more. These physical properties demonstrate that the most unique signature of explosives is the high concentration and density of the nitrogen content.

In can be seen, therefore, that a nuclear detection technique can provide for the detection of the nitrogen content to reliably indicate the presence of a large nitrogen content. However, the universal occurence of nitrogen in non-explosive materials limits the level of detection sensitivity and merely detecting the presence or absence of nitrogen alone is not sufficient. Therefore, additional information is required beyond simply sensing the presence of the nitrogen. The present invention provides for a composite cavity structure which enhances the production of this additional information using specific structures and materials for the cavity.

The basis for the explosive detection apparatus incorporating the composite cavity structure of the present invention as defined in Claim 1 is the use of neutrons from a radioisotope or an electronic neutron generator, which neutrons are then slowed down within the cavity structure to create a cloud of low energy thermal neutrons within the cavity structure. The luggage or other parcels are passed through the cavity and the thermal neutrons react with the variety of nuclei in the luggage or parcels including nitrogen and produce characteristic high energy gamma rays which may then be detected by external detectors. The output signals from the detectors may then be analyzed to detect the presence and concentration of the nitrogen content and with particular concentrations in particular profiles presenting the presence of explosive material.

The present invention also relates to the specific structure of the cavity so as to maximize the production and spectrum of the thermal neutrons so as to provide for an enhancement of the information from the detectors. The specific cavity structure may include the use of different layers of particular moderator materials so as to slow down fast neutrons produced by the source of neutrons. The various moderators affect different portions of the spectrum of neutrons initially produced by the source of neutrons to slow down these different portions of the spectrum to maximize the number of thermal neutrons within the cavity.

In the specific arrangement of the cavity structure of the present invention the source of neutrons is surrounded by a moderator material, such as heavy water, which slows down any neutrons having a speed in the portion of the spectrum above the energy of thermal neutrons and thereby slows down these neutrons into the thermal neutron portion of the spectrum. A premoderator material may surround the source of neutrons to slow down a portion of the spectrum and assist the heavy water modulator to further slow down the neutrons to the thermal neutron portion of the spectrum. The premoderator may be formed of nonclorinated hydrocarbon material such as polyetheyne or acrylic resin.

The source of neutrons may also be surrounded by a shield, such as a shield composed of a heavy metal such as bismuth, lead, tungsten, depleted uranium, etc. This shield is specifically used to absorb unwanted gamma rays that may be produced from the source. These unwanted gamma rays can hamper the performance of the system, so it is important to absorb any of these unwanted gamma rays that are along a direct line from the radiation or neutron source to the detectors.

The source of neutrons, plus the premoderator, heavy water and heavy metal shield, is located immediately adjacent a cavity through which the luggage or baggage is passed. The cavity is defined by hydrogenous material such as thin rigid nonclorinated hydrocarbon material. This thin rigid material may be thin sheets of polyethylene or acrylic which provide for low friction walls to guide the luggage, baggage, etc. through the passageway. The thin plastic walls will reflect the neutrons so that the thermal neutrons cloud will be contained within the cavity to interact with the object under observation.

Surrounding the cavity formed by the sheets of thin hydrogenous material are other moderator materials which moderate higher energy neutrons and slow down these higher energy neutrons while at the same time reflecting them back within the cavity. This additional material may include a first mass of carbonaceous material such as graphite which as indicated above, tends to slow down higher energy neutrons. The carbonaceous material also has the effect of making the flux spectrum of the neutrons more uniform. Surrounding the carbonaceous material are additional layers of moderator-absorbing material such as a layer of hydrogenous material, with boron or lithium embedded material. As an example, the embedded material may be borated paraffin and is used to absorb any neutrons moving away from the cavity volume. At the same time the borated paraffin may slow down some of the high energy neutrons and reflect them back for moderation by the graphite material and ultimately to be returned within the cavity. As an alternative to the use of borated paraffin, other hydrogenous materials, such as acrylic resin, polyethylene, water etc. mixed with boron or lithium compounds may be used. The borated paraffin is preferred since it is the most effective, relatively inexpensive and compact.

In addition to the use of the various moderator materials to provide for an enhancement of the thermal neutrons and also to provide for a desirable spectrum of the neutrons, it is also important to insure that the detectors receive the gamma rays of interest but not receive undesired neutrons. This is acomplished by shielding the sides of the detectors with a heavy metal shield material, such as lead etc. and providing for a window at the front of the detectors to stop neutrons while allowing the passage of gamma rays. This window may be constructed of an epoxy material, such as an epoxy containing boron or lithium compounds. As an example, the window may be formed of boron carbide embedded in epoxy.

The cavity structure of the present invention thereby includes an open cavity defined by the thin rigid hydrocarbon walls for receiving the passage of objects under inspection. A source of neutrons is located adjacent this cavity and detection means are also located adjacent the cavity. The detection means are protected by lead shields and boron carbide epoxy windows to insure that the detection means receive the proper gamma rays representative of the concentration of nitrogen contained in the object under observation.

The composite cavity structure also includes a number of layers of moderator material to maximize the cloud of thermal neutrons within the cavity and to enhance the spectrum of the neutrons within the cavity to optimize the production of gamma rays from any nitrogen within the object under inspection. The additional moderator materials include polyethylene, heavy water, graphite and borated paraffin and also with the use of a shield composed of bismuth.

The apparatus also includes a provision for a conveyor belt or other means to transport luggage and packages through the cavity. The belt is constructed of non-chlorinated, non-metallic materials, of which there are several.

### BRIEF DESCRIPTION OF THE DRAWINGS

A clearer understanding of the present invention will be had with reference to the following description and drawings wherein:
Figure 1 illustrates a perspective view of a luggage and parcel inspection apparatus including the composite cavity structure;
Figure 2 is a cross sectional view of the composite cavity structure taken along lines 2-2 of Figure 1;
Figure 3 is a cross sectional structure taken along lines 3-3 of Figure 2; and
Figures 4(a), (b), (c), and (d) illustrate various neutron spectrums useful in describing the operation of the composite cavity structure.

### DESCRIPTION OF THE PREFERRED EMBODIMENT

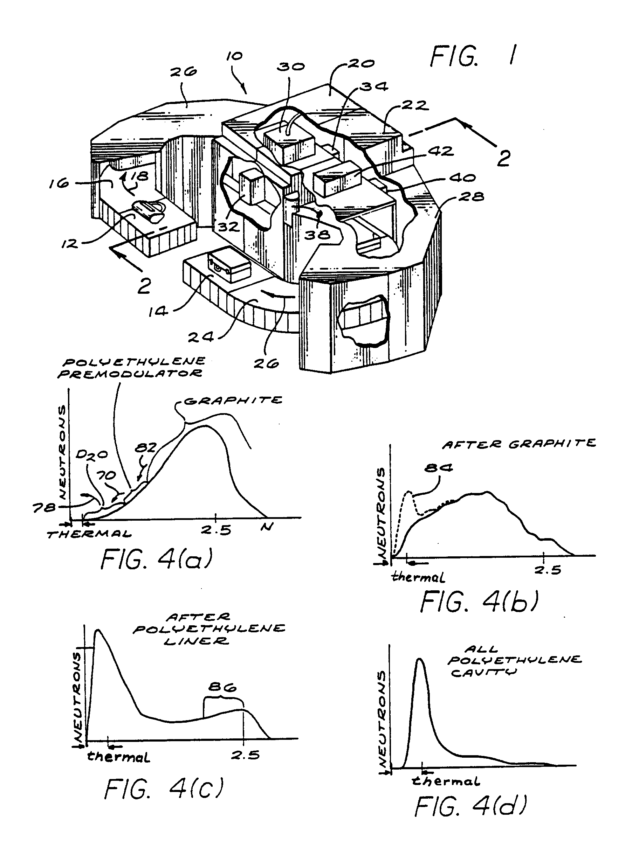

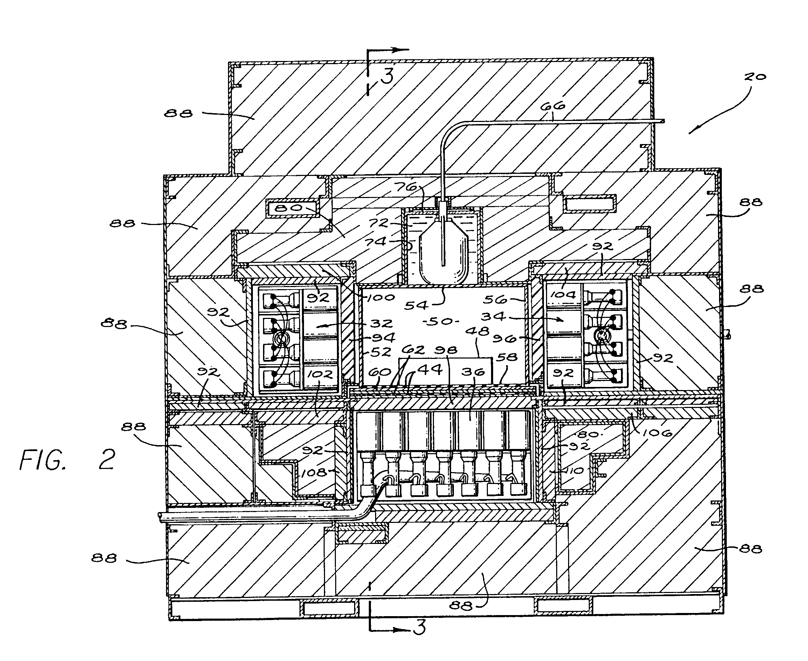

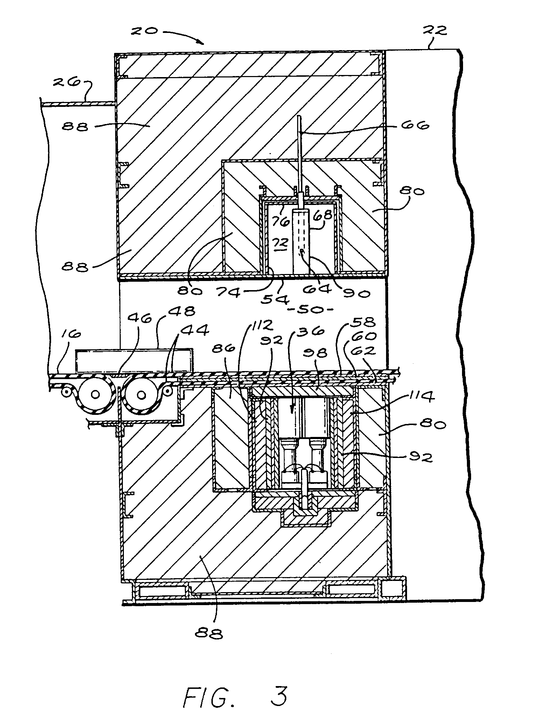

As shown in Figure 1, an explosive detection apparatus 10 includes a loading station 12 and an unloading station 14. The loading station 12 leads to an input conveyer belt 16 having a motion as shown by the arrow 18. Adjacent the input conveyer belt 16 is a first cavity structure module 20. A second cavity structure module 22 is located adjacent to the first cavity structure module 20 and adjacent to the second cavity structure module 22 is an output conveyer belt 24 having a motion as shown by the arrow 26. The output conveyer belt 24 extends to the unloading station 14. Internal to the cavity structure modules 20 and 22 are conveyer means which interconnect the conveyer belts 16 and 24. The internal conveyer means is shown in Figures 2 and 3. Extending from the cavity structure modules 20 and 22 are shield members 27 and 28 which shield members enclose the conveyer belts 16 and 24 and prevent access to the interior of the cavity structure modules 20 and 22.

Figures 2 and 3 illustrate in more detail cross sectional views of the cavity structure module 20, but is to be appreciated that Figures 2 and 3 are also illustrative of the cavity structure module 22 but with the following exception. As shown in Figure 1 in the broken away portion, cavity structure 20 includes a source of neutrons 30 located at a top position, detector structures 32 and 34 located at side positions and a further detector structure 36, as shown in Figure 2, located at a bottom position. Cavity structure module 22 includes an opposite structure having side detector structures 38 and 40 and with a top detector structure 42 and with a bottom source of neutrons. (not shown).

The groups of detector structures provide for a C-ring configuration, the C-ring of detectors in the cavity modules 20 and 22 having their open ends facing each other so as to essentially form a complete ring if the output signals from the two C-rings of detectors are combined electronically. As indicated above, although the invention is described with reference to a particular configuration for the detectors as shown in the drawings, it is to be appreciated that other types of detector arrays may be used and that the invention is not to be limited to the particular C-ring configuration for the detectors.

Turning now to Figures 2 and 3, a more detailed view of the cavity structure is shown. Extending through the cavity structure is a conveyer belt 44. The conveyer belt 44 is located adjacent to the input conveyer belt 16 at an input end and adjacent the output conveyer belt 24 at an output end. This allows the various portions of the entire detector structure to be build in modular form so that the system may be easily transported for set up at a desired location. A plate member, such as plate member 46 may be used to bridge the space between the input and conveyer belt 16 and the conveyer belt 44 extending through the cavity structure. A similar plate member would be used the bridge the space between the conveyer belt 44 and the output conveyer belt 24.

As shown in Figure 3 a piece of luggage, such as luggage 48, is shown entering the cavity structure for inspection. The piece of luggage 48 or any other luggage, baggage or parcels to be inspected is passed through an open cavity 50 defined by thin walls 52 through 58 of hydrogenous material such as a rigid nonclorinated hydrocarbon material. A preferred material is polyethylene but other material such as acrylic resin may be used. The thin polyethylene walls help contain low energy neutrons. Specifically, the cavity 50 will tend to retain a cloud of thermal neutrons therewithin for interaction with an object under inspection such as the piece of luggage 48.

The upper surface of the conveyer 44, which supports the objects for inspection, is supported by the bottom thin plastic wall 58. Additionally, the lower portion of the conveyer 44 is supported for return by a pair of spaced bearing layers 60 and 62. This above described structure provides for a smooth movement of the conveyer belt 44 through the cavity 50 to thereby smoothly and continuously move objects under observation through the cavity 50.

In order to produce the desired cloud of thermal neutrons within the cavity 50, a source of neutrons is used such as either a radioactive or electronic neutron source. As shown in Figures 2 and 3, a radioactive neutron source 64 is supported at the end of a rod 66 so that the source 64 may be inserted into the cavity structure at a position adjacent to the cavity 50. The source 64 may produce a variety of neutrons that would typically have a flux pattern as shown in Figure 4(a). As can be seen in Figure 4(a) the maximum production of neutrons is at approximately 2.5 MeV, the majority of the neutrons in the flux pattern ranging between 2 to 4 MeV. Also as can be seen in Figure 4(a), the desired thermal neutrons are at a point outside the normal flux pattern and it is, therefore, necessary to slow down most of the neutrons in the flux pattern to the thermal neutrons area which is at the position designated in Figure 4(a).

In order to accomplish slowing down of the neutrons it is necessary to use a variety of moderators to effect different portions of the flux pattern shown in Figure 4(a). These different portions of the flux pattern are marked on Figure 4(a) and with these different portion effected by specific portions of the cavity structure shown in Figures 2 and 3. Specifically, surrounding the radioactive neutron source 64 for producing the neutrons, is a sleeve 68 of nonclorinated hydrocarbon material such as polyethylene material. This sleeve 68 of polyethylene material acts as a premoderator and affects a portion of the flux shown in Figure 4(a) and moderates this portion to a lower energy, as shown in by the arrow 70.

Surrounding the polyethylene premoderator sleeve 68 is heavy water 72. The heavy water 72 is contained in a container formed by the upper wall 54 of the cavity 50, plus a cylindrical member 74 and end plate 76. The heavy water 72 serves to slow down neutrons within the portion shown in Figure 4(a) and to convert these neutrons to neutrons in the thermal energy range as shown by arrow 78. The heavy water 72 is positioned immediately adjacent the neutron source 64 so as to maximize the effectiveness of the heavy water while at the same time minimizing the amount of heavy water that has to be used.

Surrounding the cavity 50 at a position adjacent thereto and the neutron source 64 are large portions of carbonaceous material such as graphite material. All of the graphite material is marked with reference numeral 80. The graphite material 80 affects the portion of the flux field as shown in Figure 4(a) and slows down neutrons in this portion of the flux field as shown by the arrow 82. As a substitute for the graphite material, other carbonaceous material such as polyethylene may be used. This will affect the flux pattern as will be described at a later portion of this specification.

It can, therefore, be seen that all of the various types of moderator material slow down the neutrons to the desired thermal energy range, each moderator acting on different portions of the spectrum to progressively reduce the energy to build and enhance the cloud of thermal neutrons within the cavity 50. This can be seen initially in Figure 4(b) which illustrates the effect of the cavity structure, but not including the moderating effect of the polyethylene thin wall liner formed by the walls 52 to 58. As can be seen in Figure 4(b), a thermal portion of the neutron spectrum is shown in dotted lines 84. In addition, the graphite material 80 has greatly reduced the energy for the vast bulk of the neutrons in the spectrum.

Figure 4(c) shows the effect of the structure including the polyethylene thin walls 52 to 58 forming the polyethylene liner for the cavity 50. As shown in Figure 4(c), a large percentage of the neutrons are now in the desired thermal energy range and a much smaller percentage are at higher energies. However, the composite preferred embodiment of the cavity of the present invention does not completely moderate all of the neutrons to the thermal neutron range, but leaves a small portion of the neutron spectrom at higher energys, such as in the area 86 in Figure 4(c).

The neutrons at this higher energy are useful to help provide a detection of particular types of explosives. Specifically, neutrons at this higher energy can easily penetrate luggage and thermalize in the explosive. This has the effect of making it harder to shield the explosive. These higher energy neutrons are particularly useful for detecting explosives that have a high hydrogen content. Many low nitrogen explosives typically include a relatively high content of hydrogen and the neutrons at the higher energies react with the hydrogen content in the explosive so that the explosive itself acts as a moderator to thermalize the neutrons.

Since the explosive itself acts as a moderator, this produces a high level of thermal neutrons within the explosive to thereby increase the reaction with the smaller amount of nitrogen. This tends to increase the number of gamma rays from the smaller nitrogen content. This in turn produces a relative larger amount of detectable gamma rays than would normally produced with this low nitrogen content explosive.

It is thereby preferable to produce a neutron spectrum as shown in Figure 4(c) which includes some high energy neutrons in addition to the high level of thermal neutrons so as to detect not only explosives with a high nitrogen content, but also explosives with a high hydrogen content. In addition, as indicated above, the higher energy neutrons can more easily penetrate any shielding material so that the preferred cavity structure can more efficiently detect explosives even when there has been a deliberate attempt to shield the explosive material.

Surrounding the various layers of moderator material described above are layers of hydrogenous material generally marked with reference numeral 88. This hydrogenous material may be, for example, borated paraffin. As a substitute for the borated paraffin, other hydrogenous material, such as polyethylene, plexiglas, water etc. mixed with lithium compound may be used. These additional layers 88 of hydrogenous material provide for the final shielding of personnel operating the equipment. This mixed hydrogenous material absorbs any stray neutrons which escape the other layers of moderator material. The layers 88 of hydrogenous material may also tend to reflect some high energy neutrons back into the cavity structure, but primarily this material is used to provide for personnel shielding.

Figure 4(d) illustrates an alternative cavity structure wherein a hydrocarbon material such as polyethylene or other plastic material is substituted for the graphite. While this type of cavity structure tends to even further slow down the high energy neutrons, as shown in Figure 4(d), it does not produce a greater amount of thermal neutrons. As indicated above, a neutron spectrum, such as shown in Figure 4(c) is preferable, but a composite cavity structure using polyethylene instead of the graphite to produce a spectrum as shown in Figure 4(d) may also be useful in some situations.

In addition to the various moderator materials described above, the present invention may also include a shield member 90, which shield member surrounds the premoderator sleeve 68 and is located within the heavy water 72. The shield member 90 may be constructed of a heavy metal such as bismuth and is specifically used to shield the detectors located around the cavity 50 from unwanted gamma rays produced by the neutron source 64. These unwanted gamma rays are harmful to the detectors when they are inline with any of the detectors. In order to absorb these unwanted gamma rays, the shield member 90 has a configuration to lie within substantially the same plane as the detectors. In this way, the shield member 90 will absorb these unwanted gamma rays which are inline and would be directly received by a detector. As a substitute for the bismuth, other heavy metals such as lead or tungsten could be used.

The detector structures are arranged in a C-ring around the cavity 50 and with the detectors and the source 64 of neutrons in a common plane. Specifically, the detector structures 32 and 34 are located along the sides of the cavity 50 and the detector structure 36 is located below the cavity 50. As can be seen in Figure 2, the detector structures 32 and 34 include a plurality of detectors arranged in a column and the detector structure 36 includes a plurality of detectors arranged in a row. Actually, two adjacent columns and two adjacent rows are provided so that detector structure 32 includes two adjacent columns of four detectors each and with a similar structure for detector structure 36 and with bottom detector structure 36 including two adjacent rows each with seven detectors. In a preferred form of the detection system, the individual dectectors are formed by inorganic scintillators, such as sodium iodide scintillators.

Each detector structure is shielded by heavy metal material such as lead shields, all of which are generally designated by reference character 92. In this way, all sides of the detector structures are shielded from the reception of unwanted gamma rays with the exception of a front window which allows for the reception of the desired gamma rays. The shields 92 are formed of a heavy metal, such as lead, tungsten, bismuth, etc. so as to insure that no gamma rays can enter the detector structures 32, 34 and 36 except through the front window.

Detector structure 32 includes a window 94 positioned in front of the detector structure so that any gamma rays representative of nitrogen will pass through the window 94 to impinge on the plurality of detectors forming the detector structure while preventing the passage of neutrons. Similarly, detector structure 34 includes a window 96 and detector structure 36 includes a window 98. The windows 94, 96 and 98 may be composed of an hydrocarbon mixture such as an hardened epoxy resin mixed with boron carbide. This type of material provides for the passage of the gamma rays representative of nitrogen which would be the gamma rays at approximately 10.8 MeV. In order to properly shield the detector structures from neutrons, a similar epoxy boron carbide mixture is used to surround and support the detector structures. This may be seen, for example, by the use of the epoxy material 100 and 102 adjacent to the detector structure 32, the epoxy material 104 and 106 adjacent to the detector structure 34 and epoxy material 108 and 110 adjacent to detector structure 36. These materials represent the epoxy material along two sides of the detector structures, but similar epoxy material such as epoxy material 112 and 114 shown in Figure 3 would also be along the other two sides.

The present invention, therefore, provides for a composite cavity structure including an open cavity open for receiving and supporting a conveyer belt to move objects under inspection through the cavity. The cavity is subjected to cloud of neutrons having a flux spectrum including mostly thermal neutrons and some neutrons at higher energy so as to produce an enhanced detection of nitrogen contained in explosives having both a high and low content of nitrogen.

Initially, neutrons are produced from a source and with the initial spectrum of neutrons predominantly containing neutrons that are at high energy. A composite cavity includes a plurality of moderator means including a premoderator located adjacent the radiation source to slow down a portion of the flux spectrum and a heavy water moderator to further moderate neutrons to the desired thermal energies. In addition, the composite cavity includes a relatively large quantity of graphite which tends to flatten out the flux spectrum and to in general produce a large quantity of the neutrons to a lower energy. The graphite moderator, therefore, not only reduces the energy of the neutrons, but also makes the flux pattern more uniform.

The cavity opening is defined by a thin polyethylene wall liner which serves as a moderator to confine the thermal neutrons and to provide a low friction surface in case the luggage rubs it. Higher energy neutrons can escape and be moderated by the graphite so that the total combination produces the desired spectrum for the detection of nitrogen. The preferred flux spectrum includes a small fraction of neutrons at higher energies and this is desirable since some of the higher energy neutrons are thermalized in the explosive since the explosive itself can act as a moderator. This is particularly useful for explosives which do not have a high nitrogen content. The higher energy neutrons react with the hydrogen in this low nitrogen type of explosive and are moderated by the hydrogen to lower energy thermal neutrons. This increases the number of thermal neutrons that can react with the available nitrogen to increase the production of gamma rays. Because of the close proximity between these newly created thermal neutrons and the smaller amount of nitrogen, this enhances the output to the detector even from explosives having a relatively low concentration of nitrogen.

The composite cavity also includes the use of a mixed hydrogenous material such as borated paraffin to provide for a final shield structure for any personnel operating the equipment. The composite cavity is also constructed in a modular form to provide ease of construction and also ease of access to the various detector structures.

## Claims

1. A composite cavity structure in an apparatus for detecting explosives contained in objects within a cavity (50) in the cavity structure (20) by a detector means (32-36) located adjacent the cavity (50)
including
a plurality of thin, rigid wall members (52-58) consisting of a nonchlorinated hydrocarbon material and forming a passageway to define the cavity (50) in the cavity structure (20),
a source (64) of high energy neutrons located adjacent the passageway to direct neutrons into the passageway,
a first moderator means formed by heavy water (72) surrounding the source (64) of neutrons to slow down at least a portion of the neutrons to a thermal energy,
a second moderator means (80) formed by carbonaceous material at least partially surrounding the plurality of thin wall members (52-58) and the first moderator means (72) to slow down at least an additional portion of the neutrons to a lower energy and reflect back the additional portion of neutrons into the cavity (50),
the plurality of thin wall members (52-58) additionally forming a third moderator means to additionally slow down high energy neutrons passing within the cavity (50), and with the combination of the first, second and third moderator means (68,72,52-58) moderating the neutrons produced by the neutron source (64) to form a spectrum of neutrons in the cavity (50) having a peak value in the thermal energy portion of the spectrum to maximize the detection of nitrogen by interacting the thermal neutrons with the nitrogen to produce gamma rays for detection by the detector means (32-36).

2. The composite cavity structure of claim 1 wherein the neutron source (64) is surrounded by premoderator means (68) of a nonchlorinated hydrocarbon material.

3. The composite cavity structure of claim 1 or 2 additionally including a further outer shield means (88) surrounding the second moderator means (72) to prevent any stray neutrons from exiting the cavity structure (20).

4. The composite cavity structure of claim 3 wherein the outer shield means (88) is constructed of a hydrogenous material mixed with boron or lithium.

5. The composite cavity structure of claim 4 wherein the outer shield means (88) is constructed of borated paraffin.

6. The composite cavity structure of any one of claims 1 to 4 wherein the wall members (52-58) are formed of polyethylene or acrylic resin.

7. The composite cavity structure of claim 2 or any claim dependent thereon wherein the premoderator means (68) is formed of polyethylene or acrylic resin.

8. The composite cavity structure of claim 2 or any claim dependent thereon wherein the premoderator means (68) surrounding the neutron source (64) is in turn surrounded by said first moderator means (72).

9. The composite cavity structure of any one of claims 1 to 8 wherein the second moderator means (80) is formed of graphite, polyethylene or acrylic resin.

10. The composite cavity structure of any one of claims 1 to 9 additionally including a shield member (90) composed of heavy metal surrounding the neutron source (64) for absorbing unwanted gamma rays from being directed to the detector means (32-36).

11. The composite cavity structure of claim 10 wherein the shield member (90) may be composed of bismuth, lead, tungsten or depleted uranium.

12. The composite cavity structure of any one of claims 1 to 11 additionally including a shield member (92) composed of heavy metal surrounding the detector means (32-36) to shield the sides of the detector means (32-36) from unwanted gamma rays.

13. The composite cavity structure of claim 12 wherein the shield member (92) is composed of lead.

14. The composite cavity structure of any one of claims 1 to 13, additionally including a window member (92,94,96) positioned in front of the detector means (32-36) to prevent the passage of neutrons while allowing the passage of gamma rays representative of the presence of nitrogen in the opening (50).

15. The composite cavity struture of claim 14 wherein the window member (92,94,96) is formed by a hydrogenous material mixed with boron or lithium.

16. The composite cavity structure of claim 15 wherein the window member (92,94,96) is borated epoxy.

17. The composite cavity structure of any one of the preceding claims comprising conveyor means (44) extending through said cavity (50) for continuously moving objects (48) under observation through said cavity (50), the detector means comprising a plurality of detectors (32-36) disposed in at least one C-ring configuration in a common plane with the neutron source (64) extending perpendicular to the moving direction of said conveyor means (44) and surrounding the cavity (50).

## Patentansprüche

1. Zusammengesetzte Kammerkonstruktion in einer Vorrichtung zum Ermitteln von Sprengstoffen, die in Gegenständen enthalten sind, die sich in einer Kammer (50) in der Kammerkonstruktion (20) befinden, mittels einer Detektoreinrichtung (32-36), die sich benachbart der Kammer (50) befindet, enthaltend:
mehrere dünne, steife Wandelemente (52-58), die aus einem chlorfreien Kohlenwasserstoffmaterial bestehen und einen Durchgang zur Begrenzung der Kammer (50) in der Kammerkonstriiktion (20) bilden,
eine Quelle (64) für Neutronen hoher Energie, die benachbart dem Durchgang angeordnet ist, um Neutronen in den Durchgang zu richten,
eine erste Moderatoreinrichtung, die von schwerem Wasser (72) gebildet ist und die Neutronenquelle (64) umgibt, um wenigstens einen Teil der Neutronen auf eine thermische Energie abzubremsen,
eine zweite Moderatoreinrichtung (80), die von kohlenstoffhaltigem Material gebildet ist und wenigstens teilweise die dünnen Wandelemente (52-58) und die erste Moderatoreinrichtung (72) umgibt, um wenigstens einen zusätzlichen Teil der Neutronen auf eine niedrigere Energie abzubremsen und den zusätzlichen Teil der Neutronen in die Kammer (50) zurückzureflektieren,
wobei die dünnen Wandelemente (52-58) außerdem eine dritte Moderatoreinrichtung bilden, um Neutronen hoher Energie, die in den Hohlraum (50) eintreten, zusätzlich abzubremsen, und wobei die Kombination aus den ersten, zweiten und dritten Moderatoreinrichtungen (68, 72, 52-58) die von der Neutronenquelle (64) erzeugten Neutronen moderieren, daß sie ein Spektrum von Neutronen in der Kammer (50) bilden, das einen Spitzenwert im thermischen Energiebereich des Spektrums aufweist, um die Ermittlung von Stickstoff durch Wechselwirkung der thermischen Neutronen mit dem Stickstoff zu maximieren, damit Gammastrahlen für die Ermittlung durch die Detektoreinrichtungen (32-36) erzeugt werden.

2. Zusammengesetzte Kammerkonstruktion nach Anspruch 1, bei der die Neutronenquelle (64) von einer Premoderatoreinrichtung (68) aus einem chlorfreien Kohlenwasserstoffmaterial umgeben ist.

3. Zusammengesetzte Kammerkonstruktion nach Anspruch 1 oder 2, die zusätzlich eine weitere äußere Anschirmeinrichtung (88) enthält, die die zweite Moderatoreinrichtung (72) umgibt, um Streuneutronen daran zu hindern, aus der Kammerkonstruktion (20) auszutreten.

4. Zusammengesetzte Kammerkonstruktion nach Anspruch 3, bei der die äußere Abschirmeinrichtung (88) aus einem wasserstoffhaltigen Material besteht, das mit Bor oder Lithium gemischt ist.

5. Zusammengesetzte Kammerkonstruktion nach Anspruch 4, bei der die äußere Abschirmeinrichtung (88) aus mit Bor versetztem Paraffin besteht.

6. Zusammengesetzte Kammerkonstruktion nach einem der Ansprüche 1 bis 4, bei der die Wandelemente (52-58) aus Polyethylen oder Acrylharz bestehen.

7. Zusammengesetzte Kammerkonstruktion nach Anspruch 2 oder einem der davon abhängigen Ansprüche, bei der die Premoderatoreinrichtung (68) aus Polyethylen oder Acrylharz besteht.

8. Zusammengesetzte Kammerkonstruktion nach Anspruch 2 oder einem der davon abhängigen Ansprüche, bei der die Premoderatoreinrichtung (68), die die Neutronenquelle (64) umgibt, ihrerseits von der ersten Moderatoreinrichtung (72) umgeben ist.

9. Zusammengesetzte Kammerkonstruktion nach einem der Ansprüche 1 bis 8, bei der die zweite Moderatoreinrichtung (80) aus Graphit, Polyethylen oder Acrylharz besteht.

10. Zusammengesetzte Kammerkonstruktion nach einem der Ansprüche 1 bis 9, die zusätzlich ein Abschirmelement (90) enthält, das aus Schwermetall besteht und die Neutronenquelle (64) umgibt, um unerwünschte Gammastrahlen zu absorbieren, damit sie nicht auf die Detektoreinrichtungen (32-36) gerichtet werden.

11. Zusammengesetzte Kammerkonstruktion nach Anspruch 10, bei der das Anschirmelement (90) aus Wismuth, Blei, Wolfram oder nichtstrahlendem Uran besteht.

12. Zusammengesetzte Kammerkonstruktion nach einem der Ansprüche 1 bis 11, die außerdem ein Anschirmelement (92) enthält, das aus Schwermetall besteht und die Detektoreinrichtung (32-36) umgibt, um die Seiten der Detektoreinrichtungen (32-36) gegen unerwünschte Gammastrahlen abzuschirmen.

13. Zusammengesetzte Kammerkonstruktion nach Anspruch 12, bei der Anschirmelement (92) aus Blei besteht.

14. Zusammengesetzte Kammerkonstruktion nach einem der Ansprüche 1 bis 13, die außerdem ein Fensterelement (92, 94, 96) enthält, das vor den Detektoreinrichtungen (32-36) angeordnet ist, um den Durchgang von Neutronen zu verhindern, während der Durchgang von Gammastrahlen ermöglicht wird, die auf die Anwesenheit von Stickstoff in der Kammer (50) hinweisen.

15. Zusammengesetzte Kammerkonstruktion nach Anspruch 14, bei der das Fensterlement (92, 94, 96) aus einem wasserstoffhaltigen Material besteht, das mit Bor oder Lithium gemischt ist.

16. Zusammengesetzte Kammerkonstruktion nach Anspruch 15, bei der das Fensterlement (92, 94, 96) mit Bor versetztes Epoxyharz ist.

17. Zusammengesetzte Kammerkonstruktion nach einem der vorhergehenden Ansprüche, enthaltend eine Fördereinrichtung (44), die sich durch die Kammer (50) erstreckt, um observierte Gegenstände (48) kontinuierlich durch die Kammer (50) zu bewegen, wobei die Detektoreinrichtungen mehrere Detektoren (32-36) aufweisen, die in wenigstens einer C-Ring-Konfiguration einer gemeinsamen Ebene mit der Neutronenquelle (94) angeordnet ist und die C-Ring-Konfiguration sich senkrecht zur Bewegungsrichtung der Fördereinrichtung (44) erstreckt und die Kammer (50) umgibt.

## Revendications

1. Structure composite à cavité dans un appareil pour détecter des matières explosives renfermées dans des objets, à l'intérieur d'une cavité (50) ménagée dans la structure (20) à cavité, par un moyen de détection (32-36) occupant une position adjacente à la cavité (50),
comprenant
une pluralité d'éléments de paroi (52-58) minces et rigides, consistant en un hydrocarbure non chloré et formant un passage pour définir la cavité (50) dans la structure (20) à cavité,
une source (64) de neutrons de haute énergie, située au voisinage direct du passage pour introduire des neutrons dans ce passage,
un premier moyen modérateur constitué par de l'eau lourde (72), entourant la source (64) de neutrons pour ralentir au moins une part des neutrons jusqu'à obtenir une énergie thermique,
un deuxième moyen modérateur (80) constitué d'une matière carbonée, entourant au moins partiellement la pluralité de minces éléments de paroi (52-58) et le premier moyen modérateur (72), pour ralentir au moins une part additionnelle des neutrons jusqu'à obtenir une énergie plus faible, et pour renvoyer la part additionnelle de neutrons dans la cavité (50),
la pluralité de minces éléments de paroi (52-58) formant additionnellement un troisième moyen modérateur pour ralentir additionnellement des neutrons de haute énergie passant à l'intérieur de la cavité (50), la combinaison des premier, deuxième et troisième moyens modérateurs (68, 72, 52-58) modérant les neutrons engendrés par la source (64) de neutrons, afin de former, dans la cavité (50), un spectre neutronique présentant une valeur maximale dans la zone d'énergie thermique de ce spectre, en vue de maximaliser la détection d'azote par interaction des neutrons thermiques avec l'azote, pour engendrer des rayonnements gamma en vue d'une détection par le moyen de détection (32-36).

2. Structure composite à cavité selon la revendication 1, dans laquelle la source (64) de neutrons est entourée par un moyen prémodérateur (68) en un hydrocarbure non chloré.

3. Structure composite à cavité selon la revendication 1 ou 2, présentant additionnellement un moyen supplémentaire de blindage extérieur (88) entourant le deuxième moyen modérateur (72) pour empêcher de quelconques neutrons dispersés de sortir de la structure (20) à cavité.

4. Structure composite à cavité selon la revendication 3, dans laquelle le moyen de blindage extérieur (88) est constitué d'une matière hydrogénée mélangée à du bore ou du lithium.

5. Structure composite à cavité selon la revendication 4, dans laquelle le moyen de blindage extérieur (88) est constitué de paraffine boratée.

6. Structure composite à cavité selon l'une quelconque des revendications 1 à 4, dans laquelle les éléments de paroi (52-58) consistent en du polyéthylène ou en une résine acrylique.

7. Structure composite à cavité selon la revendication 2 ou une quelconque revendication dépendant de cette dernière, dans laquelle le moyen prémodérateur (68) consiste en du polyéthylène ou en une résine acrylique.

8. Structure composite à cavité selon la revendication 2 ou une quelconque revendication dépendant de cette dernière, dans laquelle le moyen prémodérateur (68), entourant la source (64) de neutrons, est à son tour ceinturé par ledit premier moyen modérateur (72).

9. Structure composite à cavité selon l'une quelconque des revendications 1 à 8, dans laquelle le deuxième moyen modérateur (80) consiste en du graphite, du polyéthylène ou une résine acrylique.

10. Structure composite à cavité selon l'une quelconque des revendications 1 à 9, présentant additionnellement une pièce de blindage (90) constituée d'un métal lourd, entourant la source (64) de neutrons pour absorber des rayonnements gamma parasites en les empêchant d'être dirigés vers le moyen de détection (32-36).

11. Structure composite à cavité selon la revendication 10, dans laquelle la pièce de blindage (90) peut être constituée de bismuth, de plomb, de tungstène ou d'uranium appauvri.

12. Structure composite à cavité selon l'une quelconque des revendications 1 à 11, présentant additionnellement une pièce de blindage (92) constituée d'un métal lourd, entourant le moyen de détection (32-36) afin de protéger, par écran, les côtés du moyen de détection (32-36) vis-à-vis de rayonnements gamma parasites.

13. Structure composite à cavité selon la revendication 12, dans laquelle la pièce de blindage (92) est constituée de plomb.

14. Structure composite à cavité selon l'une quelconque des revendications 1 à 13, présentant additionnellement un élément d'observation (92, 94, 96) placé devant le moyen de détection (32-36), pour interdire le passage de neutrons tout en autorisant le passage de rayonnements gamma indiquant la présence d'azote dans l'ouverture (50).

15. Structure composite à cavité selon la revendication 14, dans laquelle l'élément d'observation (92, 94, 96) consiste en une matière hydrogénée mélangée à du bore ou du lithium.

16. Structure composite à cavité selon la revendication 15, dans laquelle le moyen d'observation (92, 94, 96) est un époxy boraté.

17. Structure composite à cavité selon l'une quelconque des revendications précédentes, comprenant un moyen de convoyage (44) parcourant ladite cavité (50) pour imprimer un mouvement continu, à travers ladite cavité (50), à des objets (48) soumis à observation, le moyen de détection comprenant une pluralité de détecteurs (32-36) agencés selon au moins une configuration annulaire en C, dans un plan commun avec la source (64) de neutrons s'étendant perpendiculairement à la direction de mouvement dudit moyen de convoyage (44) et entourant la cavité (50).
